# EUROPÄISCHE PATENTSCHRIFT

(11) **EP 2 193 022 B1**
(45) Veröffentlichungstag und Bekanntmachung des Hinweises auf die Patenterteilung: **11.12.2013**
(21) Anmeldenummer: 08802559.8
(22) Anmeldetag: 24.09.2008
(51) Int. Cl.: B32B 9/02, E04B 1/66

(54) **FOLIE FÜR DEN BAUBEREICH UND FOLIENVERBUND**
SHEET MATERIAL FOR THE BUILDING SECTOR AND COMPOSITE SHEET-MATERIAL ARRANGEMENT
FILM POUR LE SECTEUR DE LA CONSTRUCTION ET FILM COMPOSITE

(30) Priorität: 26.09.2007 DE 102007046175
(43) Veröffentlichungstag der Anmeldung: 09.06.2010
(73) Patentinhaber: EWALD DÖRKEN AG, 58313 Herdecke (DE)
(72) Erfinder: SCHRÖER, Jörn, 58313 Herdecke (DE)
(74) Vertreter: Von Rohr
(86) Internationale Anmeldenummer: PCT/EP2008/008082
(87) Internationale Veröffentlichungsnummer: WO 2009/043515

(56) Entgegenhaltungen:
- EP-A- 1 834 762
- WO-A-02/16468
- DE-A1- 10 111 319
- DE-A1- 10 231 769
- DE-A1- 10 239 985
- DE-U1- 29 611 626
- US-A1- 2004 103 603

## Beschreibung

Die Erfindung betrifft eine Baufolie, insbesondere eine Dampfbremse, eine Unterdeckbahn oder eine Unterschalungsbahn, nach den Oberbegriffen der Ansprüche 1 und 2. Darüber hinaus betrifft die vorliegende Erfindung einen Baufolienverbund mit wenigstens einer Folie der vorgenannten Art und ggf. mit wenigstens einer mit der Baufolie verbundenen weiteren Folie und/oder mit wenigstens einem mit der Folie verbundenen Träger.

Es ist bekannt, Wärmedämm-Maßnahmen an Gebäuden, Bauteilen und Geräten vorzunehmen, um einerseits Energie einzusparen, andererseits das Bauteil vor Schäden zu bewahren, zum Beispiel durch Kondensatausfall bei durch Konvektion oder durch Diffusion eindringender Feuchtigkeit. Die Kontrolle von Konvektions- und Diffusionsvorgängen spielt daher im Baubereich eine entscheidende Rolle. Insbesondere kann so die Dämmung verbessert und dauerhaft in ihrer Funktion erhalten werden.

Speziell durch die Kontrolle der Wasserdampfdiffüsion lassen sich Feuchteschäden verhindern. Werden hierzu Dampfsperren mit einem hohen Diffüsionswiderstand verwendet, so schützt das zwar die Konstruktion vor eindringender Feuchtigkeit aus Diffusionsvorgängen, hat aber den Nachteil, daß Austrocknungsvorgänge nach innen be- oder verhindert sind. Verwendet man Dampfbremsen mit niedrigem Diffusionswiderstand, so ist zwar die Rücktrocknung möglich, aber es besteht die Gefahr einer zu großen Befeuchtung in Folge von Diffusionsvorgängen.

In diesem Zusammenhang sind aus dem Stand der Technik (vgl. hierzu beispielsweise DE 102 31 769 A1, DE 102 39 985 A1, DE 101 11 319 A1, US 2004/0103603 A1, DE 296 11 626 U1 oder EP 1 834 762 A2) Folien mit variabler Wasserdampfdurchlässigkeit bekannt. Vorrangig werden hier Dampfbremsen mit einem von der Umgebungsfeuchte abhängigen Wasserdampf-Diffusionswiderstand bzw. variablen s_{d}-Wert eingesetzt, die beispielsweise im Dachbereich zusätzlich zu der Verlegung über oder unter den Sparren hinweg auch wellenlinienformig um die Sparren herum angeordnet werden können.

Aus der DE 296 11 626 U ist eine Barriere zur Behinderung von Luftkonvektion und Emission von Schadstoffen aus Bauteilen in Räumen von Gebäuden bekannt, wobei raumseitig eine Polyamidfolie angeordnet ist. Die Folie kann aus Polyamid 3, 4, 6 oder 12 bzw. aus einem Mischpolyamid bestehen. Bei einer Foliendicke von 50 µm weist die Folie unter Meßbedingungen nach DIN 52650 im trockenen Bereich bei einer mittleren relativen Feuchte von etwa 30 % einen Wasserdampf-Diffusionswiderstand (s_{d}-Wert) von 4,5 m und im feuchten Bereich bei einer mittleren relativen Feuchte von ca. 70 % einen Wasserdampf-Diffusionswiderstand (s_{d}-Wert) von 0,5 m einer diffusionsäquivalenten Luftschichtdicke auf

Aus der DE 102 39 985 B4 sind für die Bautechnik geeignete, aus mindestens drei flächenformigen Schichten bestehende Abdichtungsbänder von 5 bis 20 cm Breite bekannt, wobei die mittlere Schicht aus einer Folie eines Ionomeren besteht, die bei höherer relativer Luftfeuchtigkeit einen geringeren Wasserdampf-Diffusionswiderstand hat als bei niedrigerer relativer Luftfeuchtigkeit, wobei die Folie bei 72,5 % relativer Luftfeuchtigkeit einen s_{d}-Wert von 0,1 bis 5 m und bei 25 % relativer Luftfeuchtigkeit einen s_{d}-Wert von 1 bis 10 m aufweist und wobei die Differenz beider Werte 0,5 m oder größer ist. Die beiden äußeren Schichten, welche die mittlere Schicht schützen und tragen, bestehen aus gleichem oder verschiedenem Material und haben einen s_{d}-Wert, der unter dem tiefsten s_{d}-Wert der Folie liegt. Darüber hinaus können ggf. weitere Schichten aus wasserdampfdurchlässigen Gerüst- und/oder verarbeitungstechnischen Hilfsstoffen vorgesehen sein. Als Comonomere können verschiedene Monomere auf synthetischer Basis eingesetzt werden.

Aus der DE 101 11 319 A1 ist ein Werkstoff für eine Folie zum Auskleiden von Gebäuden oder zum Abdecken von Bauteilen wie Wänden, Böden, Dächer und Decken in Gebäuden oder für eine Dampfbremse zur Wärmedämmung in Gebäuden bekannt, wobei zumindest ein Teil des Werkstoffs aus polaren Werkstoffen besteht und einen von der Umgebungsfeuchte abhängigen Wasserdampf-Diffusionswiderstand (s_{d}-Wert) aufweist. Bei einer relativen Feuchte im Bereich von 20 % bis 60 % oder 30 % bis 50 % beträgt der s_{d}-Wert 5 bis 10 m diffusionsäquivalente Luftschichtdicke und bei einer relativen Feuchte im Bereich von 50 % bis 95 % beträgt der s_{d}-Wert kleiner 2 m oder kleiner 1 m diffusionsäquivalente Luftschichtdicke. Ein Teil des Werkstoffs kann aus einem Polymer bestehen, in dem polare Inhaltsstoffe wie Ionomerharz mit Ethylen und Methacrylsäure enthalten sind. Darüber hinaus kann ein Teil des Werkstoffs aus einem auf Ethylen basierenden Polymer- oder Copolymer-Werkstoff wie Polyethylen oder Polypropylen bestehen, dem Acrylsäure zugesetzt ist.

In der DE 102 31 769 A1 ist eine Dampfbremsfolie mit erhöhter Reißdehnung in Längs- und Querrichtung und variabler Wasserdampfdurchlässigkeit beschrieben. Die Dampfbremsfolie besteht aus einem Copolyamid, wodurch eine erhöhte Reißdehnung in Längs- und Querrichtung der Dampfbremsfolie erreicht werden soll. Die Dampfbremsfolie soll bei umgebender Atmosphäre von 100 % und einer Umgebungstemperatur von 0° C einen Wasserdampf-Diffusionswiderstand im Bereich von 4,5 bis 8 g/(m²d) und bei einer relativen Feuchte der die Dampfbremsfolie umgebenden Atmosphäre von 85 % und einer Umgebungstemperatur von 23° C einen Wasserdampf-Diffusionswiderstand im Bereich von 11 bis 23 g/(m²d) aufweisen.

Die aus dem Stand der Technik bekannten Dampfbremsen und Folien beinhalten in der Regel petrochemisch basierte Polymere, die unter hohem Energieeinsatz und nach ihrer Nutzung aufwendig entsorgt werden müssen. Dies ist mit hohen Kosten verbunden. In den petrochemisch basierten Polymeren werden dabei lediglich amidische oder ionische Funktionalitäten eingesetzt.

Aus der WO 02/16468 A1 ist es bekannt, biologisch abbaubare Polymerfilme bei laminierten Beschichtungen, Verpackungen oder anderes Verpackungsmaterial einzusetzen.

Aufgabe der vorliegenden Erfindung ist es, eine Baufolie und eine Baufolienverbund jeweils der eingangs genannten Art zur Verfügung zu stellen, die sich kostengünstig bei geringem Energieeinsatz herstellen lassen und nach ihrer Nutzung in einfacher Weise und kostengünstig entsorgt werden können, wobei über die zu erwartende Lebensdauer hinweg die Funktion der Baufolie oder des Baufolienverbundes im Baubereich im wesentlichen sichergestellt sein soll. Im übrigen ist es Aufgabe der vorliegenden Erfindung, eine Baufolie oder einen Baufolienverbund zur Verfügung zu stellen, die sich durch eine hohe Dehnung auszeichnen.

Die vorgenannten Aufgaben sind bei einer ersten Ausführungsform einer Baufolie der eingangs genannten Art gemäß Anspruch 1 dadurch gelöst, daß die Funktionsschicht wenigstens ein aus einem nachwachsenden Rohstoff erhältliches Material, insbesondere wenigstens ein Polymer auf der Basis eines nachwachsenden Rohstoffs, aufweist. Bei einer alternativen erfindungsgemäßen Ausführungsform einer Baufolie der eingangs genannten Art ist nach Anspruch 2 vorgesehen, daß die Funktionsschicht wenigstens ein biologisch abbaubares Material, insbesondere ein biologisch abbaubares Polymer, aufweist, wobei das biologisch abbaubare Material nach DIN EN 13432:2000 desintegrierbar ist und wobei bei aerober Kompostierung des abbaubaren Materials nach einer gegenüber der DIN EN 13432:2000 verlängerten Kompostierungsdauer von mehr als 12 Wochen und höchstens 80 Wochen in einer größer 2 mm-Siebfraktion des kompostierten Materials maximal 10 % des ursprünglichen Trockengewichtes des biologisch abbaubaren Materials auffindbar sind. Im übrigen sind die vorgenannten Aufgaben gelöst durch einen Baufolienverbund mit wenigstens einer Folie der vorgenannten Art und gegebenenfalls wenigstens einer weiteren Folie und/oder wenigstens einem Träger. Die Kompostierbarkeit bezieht sich im Sinne der Erfindung lediglich auf die biologisch abbaubare(n) Komponente(n) in der Folie oder in dem Folienverbund.

Die zuvor beschriebene Baufolie und der Baufolienverbund lassen sich bei geringem Energieeinsatz herstellen und nach Ablauf der zu erwartenden Lebensdauer bzw. nach der Nutzung in einfacher Weise und kostengünstig entsorgen. Beispielsweise bei der Verwendung der erfindungsgemäßen Baufolie bzw. des Baufolienverbundes im Dach- oder Fassadenbereich hat sich bei Alterungsversuchen gezeigt, daß diese über die zu erwartende Lebensdauer von bis zu 20 - 30 Jahren nicht zersetzt und im wesentlichen ihre Funktionalität beibehalten werden, und zwar auch dann, wenn die Folie bzw. der Folienverbund mit kondensiertem Wasser über längere Zeit in Berührung kommt. Dies ist darauf zurückzuführen, daß die in der Baufolie oder dem Baufolienverbund eingesetzten aus nachwachsenden Rohstoffen erhältlichen Materialien bzw. die eingesetzten biologisch abbaubaren Materialien ein begrenztes Wasseraufnahmevermögen aufweisen und hängt im übrigen mit der Abwesenheit von zersetzenden Mikroorganismen zusammen. Die erfindungsgemäße Baufolie bzw. der Baufolienverbund weisen darüber hinaus eine variable Wasserdampfdurchlässigkeit und eine hohe Dehnung auf, wobei sich überraschenderweise gezeigt hat, daß auch andere als amidische oder ionische Funktionalitäten verwendet werden können, sofern Polymere als Material der Funktionsschicht eingesetzt werden.

Die erfindungsgemäße Baufolie besteht aus einer Funktionsschicht, die beispielsweise selbst eine Folie sein kann oder ein entsprechend beschichteter Träger, und ggf. einer Träger- oder Verstärkungsschicht, die mit der Funktionsschicht verbunden ist. Die Folie kann als flächiges Produkt, insbesondere bahnförmig als Rollenware, vorliegen und eine zur Verarbeitung im Baubereich ausreichend hohe Biegbarkeit bzw. Verformbarkeit aufweisen.

Es versteht sich, daß das aus einem nachwachsenden Rohstoff erhältliche Material nach DIN EN 13432:2000 bei entsprechend verlängerter Prüfdauer biologisch abbaubar sein kann, so wie dies oben beschrieben worden ist. Im übrigen versteht es sich, daß die Funktionsschicht wenigstens ein aus einem nachwachsenden Rohstoff erhältliches Material und zusätzlich ggf. ein weiteres biologisch abbaubares Material aufweisen kann.

Die Funktionsschicht kann wenigstens ein Polymer auf der Basis eines nachwachsenden Rohstoffs und/oder wenigstens ein biologisch abbaubares Polymer aufweisen oder auch eine Mischung von unterschiedlichen Polymeren auf der Basis von nachwachsenden Rohstoffen und/oder unterschiedlichen biologisch abbaubaren Polymeren. Im übrigen kann die Funktionsschicht eine Mischung von biologisch abbaubaren Polymeren und/oder Polymeren auf der Basis von nachwachsenden Rohstoffen mit herkömmlichen synthetischen Polymeren enthalten. Vorzugsweise können nachfolgend angegebene Polymere eingesetzt werden:

| **Polymertyp** | **Monomer bzw. Basis** | **Hersteller** | **Handelsname** |
|---|---|---|---|
| Polyester | Butylenadipat-terephthalat | BASF | Ecoflex |
| | Butylensuccinatadipat | Showa | Bionolle |
| | Butylensuccinat-terephthalat | Novamont | Eastar Bio |
| | Butylensuccinatadipat | IReChem | EnPol |
| Polyhydroxyalkanoate | Hydroxyalkanoat | PHB (Metabolix) | Metabolix |
| | Hydroxybutyrat-hydroxyhexanoat | | Nodax |
| Polylactide | Aliphatischer Polyester auf Basis Milchsäure | Narureworks (Cargill) | |
| Polyesterurethane | Aliphatisches Polyesterurethan | Simadzu | PEU-Enfresin |
| Polysaccharide | Stärke-basiert | BIOP (BioPolymerTechnologies) | Biopar |
| Polysaccharide | Mischung aus Maisstärke-Basis und Ecoflex | BASF | Ecovio |

Als Zusatzstoffe können bei Polymeren übliche Additive, wie Pigmente, Farbstoffe, Füll- und Verstärkungsstoffe, Verstärkungsfasern, Stabilisatoren, Gleitmittel oder dgl. eingesetzt werden, wobei, vorzugsweise, als Zusatzstoffe nachwachsenden Rohstoffe und/oder biologisch gemäß DIN EN 13432:2000 abbaubare Stoffe mit einer verlängerten Kompostierungsdauer von mehr als 12 Wochen und höchstens 80 Wochen vorgesehen sein können.

Da es sich bei der erfindungsgemäßen Folie und dem Folienverbund um vergleichsweise langlebige Produkte für den Baubereich handelt, ist eine gegenüber der DIN EN 13432:2000 verlängerte Prüfdauer von mehr als 12 Wochen ohne weiteres tolerierbar. Vorzugsweise sollte die verlängerte Kompostierungsdauer höchstens 60 Wochen, weiter vorzugsweise höchstens 48 Wochen, insbesondere höchstens 18 Wochen, betragen. In diesem Zusammenhang sollte die Wasserdampfdurchlässigkeit der Funktionsschicht und/oder der Folie bzw. des Folienverbundes nach wenigstens 5 Jahren Anwendung im Baubereich, vorzugsweise nach wenigstens 10 Jahren, weiter vorzugsweise nach 20 Jahren, ca. 30 bis 70 %, vorzugsweise ca. 50 %, der Wasserdampfdurchlässigkeit bzw. des s_{d}-Wertes im Neuzustand der Folie betragen. Weiter sollte die Reißkraft der Funktionsschicht und/oder der Folie bzw. des Folienverbundes nach wenigstens 5 Jahren Anwendung im Baubereich, vorzugsweise nach wenigstens 10 Jahren, insbesondere nach 20 Jahren, ca. 10 bis 50 N / 5 cm betragen. Damit ist sichergestellt, daß die Funktion der erfindungsgemäßen Folie bzw. des Folienverbundes über die gesamte Lebens- bzw. Nutzungsdauer im wesentlichen erhalten bleibt.

Der Anteil des aus nachwachsenden Rohstoffen erhältlichen Materials in der Funktionsschicht und/oder der Anteil des biologisch abbaubaren Materials in der Funktionsschicht kann größer als 40 Gew.-%, vorzugsweise größer als 60 Gew.-%, weiter vorzugsweise größer als 80 Gew.-% und insbesondere größer als 95 Gew.-%, sein. Der Anteil des aus nachwachsenden Rohstoffen erhältlichen Materials in der Folie oder im Folienverbund und/oder der Anteil des biologisch abbaubaren Materials in der Folie oder im Folienverbund kann in diesem Zusammenhang größer als 10 Gew.-%, vorzugsweise größer als 30 Gew.-%, weiter vorzugsweise größer als 60 Gew.-% und insbesondere größer als 95 Gew.-%, sein. Dadurch sind eine Herstellung der erfindungsgemäßen Baufolie bei geringem Energieeinsatz und deren einfache und kostengünstige Entsorgung nach Ablauf der Nutzungsdauer sichergestellt.

Um eine ausreichende Verarbeitbarkeit und die Funktion der erfindungsgemäßen Baufolie über die zu erwartende Lebensdauer sicherzustellen, sollte die minimale Dehnung der Funktionsschicht und/oder der Baufolie bzw. des Baufolienverbundes nach DIN EN 2311 größer als 5 % , vorzugsweise größer als 20 %, weiter vorzugsweise größer als 50 % und insbesondere größer als 100 %, sein. Die maximale Dehnung der Funktionsschicht und/oder der Baufolie bzw. des Baufolienverbundes nach DIN EN 12311 kann kleiner als 1000 %, vorzugsweise kleiner als 600 %, weiter vorzugsweise kleiner als 200 %, sein.

Um sicherzustellen, daß die erfindungsgemäße Baufolie bzw. der Baufolienverbund über die zu erwartende Lebensdauer auch bei Kontakt mit kondensiertem Wasser nicht zersetzt wird und die Funktion im wesentlichen beibehält, kann die Wasseraufnahme der Funktionsschicht und/oder der Folie bzw. des Folienverbundes nach DIN 53714 bei 50 % relativer Feuchte und Sättigung zwischen 0,45 bis 40 %, vorzugsweise zwischen 1,0 bis 30 %, weiter vorzugsweise zwischen 1,5 bis 20 %, insbesondere zwischen 2 bis 8 % oder zwischen 10 bis 40 %, betragen.

Die Funktionsschicht und/oder Folie bzw. der Folienverbund kann eine Dicke zwischen 1 bis 1000 µm, vorzugsweise zwischen 2 bis 500 µm, weiter vorzugsweise zwischen 5 bis 100 µm, aufweisen. Dadurch ist eine ausreichend hohe Wasserdampfdurchlässigkeit gewährleistet. Das Flächengewicht der Funktionsschicht und/oder der Folie bzw. des Folienverbundes kann 1 bis 1000 g/m², vorzugsweise 2 bis 500 g/m², weiter vorzugsweise 5 bis 100 g/m² betragen. Um eine ausreichend hohe Belastbarkeit der Baufolie sicherzustellen, kann die Reißkraft der Funktionsschicht und/oder der Baufolie bzw. des Baufolienverbundes einen Wert von 10 bis 1500 N/5 cm, vorzugsweise 50 bis 800 N/5 cm, weiter vorzugsweise 80 bis 500 N/5 cm, aufweisen.

Um die erfindungsgemäße Baufolie bzw. den Baufolienverbund im Baubereich einsetzen zu können, sollte die Funktionsschicht und/oder die Baufolie bzw. der Baufolienverbund bei einer statischen Wassersäule von wenigstens 10 cm, vorzugsweise von wenigstens 1 m, weiter vorzugsweise von wenigstens 1,5 m, wasserdicht sein.

Wie bereits darauf hingewiesen worden ist, kann die Funktionsschicht selbst aus verschiedenen Schichten zusammengesetzt sein. Dabei können gleiche oder unterschiedliche Schichten nebeneinander und/oder übereinander angeordnet sein. Bei mehrschichtigem Aufbau können unterschiedliche Funktionalitäten in der Funktionsschicht vereint werden. Grundsätzlich ist es natürlich auch möglich, daß die Funktionsschicht einschichtig aufgebaut ist.

Die erfindungsgemäße Baufolie kann als weitere Schicht, vorzugsweise als Trägerschicht für die Funktionsschicht, eine Textilschicht, eine Gewebeschicht, eine Vliesschicht oder eine ggf. perforierte weitere Folie aufweisen. Dabei besteht die weitere Schicht vorzugsweise aus wenigstens einem aus nachwachsenden Rohstoffen erhältlichen Material, insbesondere aus einem Polymer auf der Basis nachwachsender Rohstoffe, und/oder weist wenigstens ein biologisch abbaubares Material, insbesondere ein biologisch abbaubares Polymer, auf, wobei das biologisch abbaubare Material nach DIN EN 13432:2000 desintegrierbar ist und wobei bei aerober Kompostierung des abbaubaren Materials nach einer gegenüber der DIN EN 13432:2000 verlängerten Kompostierungsdauer von mehr als 12 Wochen und höchstens 80 Wochen, vorzugsweise von höchstens 60 Wochen, weiter vorzugsweise von höchstens 48 Wochen, insbesondere von höchstens 18 Wochen, in einer größer 2 mm-Siebfraktion des kompostierten Materials maximal 10 % des ursprünglichen Trockengewichtes des biologisch abbaubaren Materials auffindbar sind. Dadurch wird sichergestellt, daß die erfindungsgemäße Folie bzw. der Folienverbund bei geringem Energieeinsatz herstellbar und/oder einfach und kostengünstig entsorgbar ist.

Die Wasserdampfdurchlässigkeit der weiteren Schicht kann kleiner als die Wasserdampfdurchlässigkeit der Funktionsschicht sein, um die Wasserdampfdurchlässigkeit der Baufolie bzw. des Baufolienverbundes nicht zu beeinflussen.

Die erfindungsgemäße Baufolie läßt sich in einfacher und kostengünstiger Weise durch Gießfolienextrusion, Blasfolienextrusion, Gießen und Trocknen von Emulsionen oder Dispersionen herstellen. Im übrigen kann die Baufolie durch Verkleben oder Verschweißen von wenigstens einer Funktionsschicht mit wenigstens einer weiteren Schicht oder durch Extrusionsbeschichtung oder Pastenbeschichtung wenigstens einer Trägerschicht mit wenigstens einer Funktionsschicht oder durch Aufsprühen wenigstens einer Funktionsschicht auf wenigstens eine Trägerschicht erhältlich sein. Es lassen sich Baufolien bzw. Baufolienverbunde mit mehreren gleichen oder unterschiedlichen Schichten, die nebeneinander und/oder übereinander angeordnet sein können, herstellen.

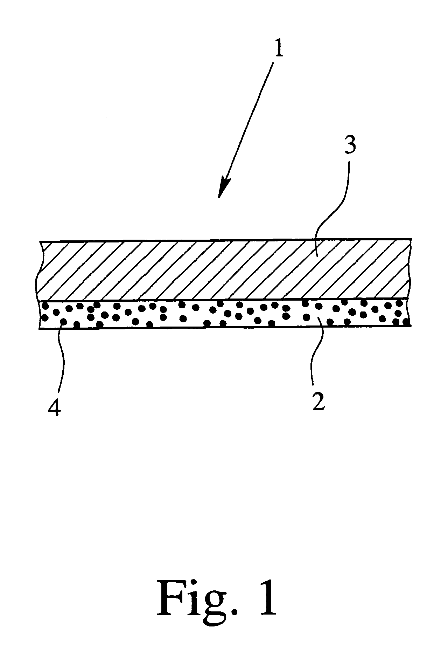

Die erfindungsgemäße Baufolie bzw. der Baufolienverbund läßt sich als Dampfbremse mit Verlegung über die Sparren hinweg außen oder innen verlaufend oder mit Verlegung schlaufenförmig über die Sparren hinweg einsetzen, wobei unter dem Begriff "Sparren" alle länglichen Konstruktionselemente im Dach- und Fassadenbereich zu verstehen sind, vorzugsweise aus Holzwerkstoffen. Die erfindungsgemäße Baufolie bzw. der Baufolienverbund können als Dampfbremssperre ausgebildet sein, wobei die Baufolie oder der Baufolienverbund als Dampfbremse in feuchtem Klima und als Dampfsperre in trockenem Klima wirken. Im übrigen können die Baufolie und der Baufolienverbund als Dampfbremsunterdeckbahn, d.h. diffusionsoffene Unterdeckbahn im feuchten Klima und Dampfbremse im trockenen Klima, ausgebildet sein. Eine Verlegung der als Unterdeckbahn ausgebildeten erfindungsgemäßen Baufolie bzw. des erfindungsgemäßen Baufolienverbundes ist über die Sparren hinweg außen oder innen oder schlaufenförmig über die Sparren hinweg möglich. In allen Fällen ist die Verlegung im geschalten Dachbereich oder im Fassadenbereich möglich. Des weiteren kann die Baufolie oder der Baufolienverbund auch auf Betondächem eingesetzt werden, bei Holzständer- oder Fachwerkkonstruktionen auch im Sockelbereich. Bevorzugte Werte für die Wasserdampfdurchlässigkeit der erfindungsgemäßen Baufolie bzw. des Baufolienverbundes sind in der in Fig. 1 dargestellten Tabelle aufgelistet worden.

### Ausführungsbeispiel 1

Aus einem Polyester mit dem Handelsnamen Ecoflex der Firma BASF wird eine Gießfolie mit einem Flächengewicht von 100 g/m² extrudiert. Bei einer relativen Feuchte von 60 % wird bei 23° C ein s_{d}-Wert von 1,1 m gemessen. Im trockenen Bereich beträgt der s_{d}-Wert bei einer relativen Feuchte von 25 % 3,5 m. Die so erhaltene Folie kann als variable Dampfbremse mit schlaufenförmiger Verlegung um die Sparren eingesetzt werden oder als Dampfbremse über die Sparren hinweg innenseitig.

### Ausführungsbeispiel 2

Ein Vlies mit einem Flächengewicht von 100 g/m² aus vernadelten Hanffasern wird mit einer Folie mit einem Flächengewicht von 80 g/m² aus einem Polyester mit dem Handelsnamen Ecoflex der Firma BASF extrusionsbeschichtet. Bei einer relativen Feuchte von 70 % wird bei 23° C ein s_{d}-Wert von 0,8 m gemessen. Im trockenen Bereich beträgt der s_{d}-Wert bei einer relativen Feuchte von 30 % 2,5 m.

Eine Ausführungsform einer erfindungsgemäßen Baufolie ist in der Zeichnung dargestellt und wird im folgenden näher beschrieben. Es zeigen
- Fig. 1: eine schematische Querschnittsansicht einer erfindungsgemäßen Baufolie für den Baubereich und

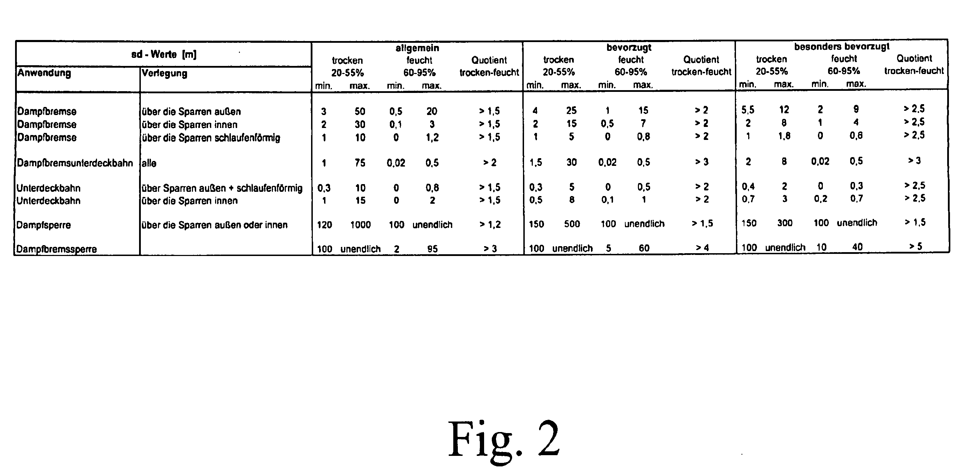

- Fig. 2: eine tabellarische Aufstellung von s_{d}-Werten in [m] für unterschiedliche Anwendungsbereiche der erfindungsgemäßen Baufolie bzw. des Baufolienverbundes und für unterschiedliche Arten der Verlegung.

In Fig. 1 ist ein Ausschnitt aus einer Querschnittsansicht einer erfindungsgemäßen Baufolie 1 für den Baubereich dargestellt, die beispielsweise als Dampfbremse, Unterschalungsbahn oder Unterdeckbahn eingesetzt werden kann. Die Baufolie 1 weist eine Funktionsschicht 2 mit einem von der Umgebungsfeuchte abhängigen Wasserdampf-Diffusionswiderstand (s_{d}-Wert) auf und eine mit der Funktionsschicht 2 verbundene Träger- bzw. Verstärkungsschicht 3.

Um die Herstellung der Baufolie 1 bei geringem Energieeinsatz und eine einfache und kostengünstige Entsorgung nach Ablauf der Nutzungsdauer sicherzustellen, ist bei der in Fig. 1 dargestellten Folie vorgesehen, daß die Funktionsschicht 2 ein Material 4 aufweist, das aus einem nachwachsenden Rohstoff erhältlich ist und, vorzugsweise, biologisch abbaubar ist, wobei das biologisch abbaubare Polymer nach DIN EN 13432:2000 desintegrierbar ist bei aerober Kompostierung und verlängerter Kompostierungsdauer von mehr als 12 Wochen und höchstens 80 Wochen.

## Patentansprüche

1. Baufolie (1), insbesondere Dampfbremse, Unterdeckbahn oder Unterschalungsbahn, mit wenigstens einer Funktionsschicht (2) und ggf. wenigstens einer weiteren Schicht, insbesondere einer Träger- und/oder Verstärkungsschicht (3), wobei die Funktionsschicht (2) einen von der Umgebungsfeuchte abhängigen Wasserdampf-Diffusionswiderstand (s_{d}-Wert) aufweist, **dadurch gekennzeichnet, daß** die Funktionsschicht (2) wenigstens ein aus einem nachwachsenden Rohstoff erhältliches Material (4), insbesondere wenigstens ein Polymer auf der Basis eines nachwachsenden Rohstoffs, aufweist.

2. Baufolie (1), insbesondere Dampfbremse, Unterdeckbahn oder Unterschalungsbahn, mit wenigstens einer Funktionsschicht (2) und ggf. wenigstens einer weiteren Schicht, insbesondere einer Träger- und/oder Verstärkungsschicht (3), wobei die Funktionsschicht (2) einen von der Umgebungsfeuchte abhängigen Wasserdampf-Diffusionswiderstand (s_{d}-Wert) aufweist, insbesondere nach Anspruch 1, **dadurch gekennzeichnet, daß** die Funktionsschicht (2) wenigstens ein biologisch abbaubares Material (4), insbesondere ein biologisch abbaubares Polymer, aufweist, wobei das biologisch abbaubare Material (4) nach DIN EN 13432:2000 desintegrierbar ist und bei aerober Kompostierung des abbaubaren Materials (4) nach einer gegenüber der DIN EN 13432:2000 verlängerten Kompostierungsdauer von mehr als 12 Wochen und höchstens 80 Wochen in einer größer 2mm-Siebfraktion des kompostierten Materials maximal 10 % des ursprünglichen Trockengewichtes des biologisch abbaubaren Materials (4) auffindbar sind.

3. Baufolie nach einem der vorhergehenden Ansprüche, **dadurch gekennzeichnet, daß** die Reißkraft der Funktionsschicht (2) nach wenigstens 5 Jahren Anwendung im Baubereich, vorzugsweise nach wenigstens 10 Jahren, insbesondere nach 20 Jahren, wenigstens 10 bis 50 N/5 cm beträgt.

4. Baufolie nach einem der vorhergehenden Ansprüche, **dadurch gekennzeichnet, daß** der Anteil des aus nachwachsenden Rohstoffen erhältlichen Materials (4) in der Funktionsschicht (2) und/oder der Anteil des biologisch abbaubaren Materials (4) in der Funktionsschicht (2) größer als 40 Gew.-% ist, vorzugsweise größer als 60 Gew.-%, weiter vorzugsweise größer als 80 Gew.-% und insbesondere größer als 95 Gew.-%.

5. Baufolie nach einem der vorhergehenden Ansprüche, **dadurch gekennzeichnet, daß** der Anteil des aus nachwachsenden Rohstoffen erhältlichen Materials (4) in der Folie und/oder der Anteil des biologisch abbaubaren Materials (4) in der Folie größer als 10 Gew.-% ist, vorzugsweise größer als 30 Gew.-%, weiter vorzugsweise größer als 60 Gew.-% und insbesondere größer als 95 Gew.-%.

6. Baufolie nach einem der vorhergehenden Ansprüche, **dadurch gekennzeichnet, daß** die minimale Dehnung der Funktionsschicht (2) nach DIN EN 12311 größer als 5%, vorzugsweise größer als 20%, weiter vorzugsweise größer als 50% und insbesondere größer als 100% ist und/oder daß die maximale Dehnung der Funktionsschicht (2) nach DIN EN 12311 kleiner als 1000% ist, vorzugsweise kleiner als 600%, weiter vorzugsweise kleiner als 200%.

7. Baufolie nach einem der vorhergehenden Ansprüche, **dadurch gekennzeichnet, daß** die Wasseraufnahme der Funktionsschicht (2) nach DIN 53714 bei 50% r.F. und Sättigung zwischen 0,45 bis 40%, vorzugsweise zwischen 1,0 bis 30%, weiter vorzugsweise zwischen 1,5 bis 20%, insbesondere zwischen 2 bis 8%, oder zwischen 10 bis 40%, beträgt.

8. Baufolie nach einem der vorhergehenden Ansprüche, **dadurch gekennzeichnet, daß** die Reißkraft der Funktionsschicht (2) 10 bis 1500 N/5cm, vorzugsweise 50 bis 800 N/5cm, weiter vorzugsweise 80 bis 500 N/5cm, beträgt.

9. Baufolie nach einem der vorhergehenden Ansprüche, **dadurch gekennzeichnet, daß** die Funktionsschicht (2) bei einer statischen Wassersäule von wenigstens 10 cm, vorzugsweise von wenigstens 1 m, weiter vorzugsweise von wenigstens 1,5 m, wasserdicht ist.

10. Baufolie nach einem der vorhergehenden Ansprüche, **dadurch gekennzeichnet, daß** die Funktionsschicht (2) mehrschichtig ist.

11. Baufolie nach einem der vorhergehenden Ansprüche, **dadurch gekennzeichnet, daß** als weitere Schicht, vorzugsweise als Trägerschicht (3), eine Textilschicht, eine Gewebeschicht, eine Vliesschicht, oder eine weitere Folie vorgesehen ist und/oder daß die weitere Schicht wenigstens ein aus nachwachsenden Rohstoffen erhältliches Material, insbesondere ein Polymer auf der Basis nachwachsender Rohstoffe, aufweist und/oder daß die weitere Schicht wenigstens ein biologisch abbaubares Material, insbesondere ein biologisch abbaubares Polymer, aufweist, wobei, vorzugsweise, das biologisch abbaubare Material nach DIN EN 13432:2000 desintegrierbar ist und bei aerober Kompostierung des abbaubaren Materials nach einer gegenüber der DIN EN 13432:2000 verlängerten Kompostierungsdauer von mehr als 12 Wochen und höchstens 80 Wochen in einer größer 2mm-Siebfraktion des kompostierten Materials maximal 10 % des ursprünglichen Trockengewichtes des biologisch abbaubaren Materials auffindbar sind.

12. Baufolie nach einem der vorhergehenden Ansprüche, **dadurch gekennzeichnet, daß** die Wasserdampfdurchlässigkeit der weiteren Schicht kleiner als die Wasserdampfdurchlässigkeit der Funktionsschicht (2) ist.

13. Baufolie nach einem der vorhergehenden Ansprüche, **dadurch gekennzeichnet, daß** die Folie durch Verkleben oder Verschweißen von wenigstens einer Funktionsschicht (2) mit wenigstens einer weiteren Schicht oder durch Extrusionsbeschichtung oder Pastenbeschichtung wenigstens einer Trägerschicht (4) mit wenigstens einer Funktionsschicht (2) oder durch Aufsprühen wenigstens einer Funktionsschicht (2) auf wenigstens eine Trägerschicht (4) erhältlich ist.

14. Baufolienverbund mit wenigstens einer Baufolie (1) nach einem der vorhergehenden Ansprüche 1 bis 13 und gegebenenfalls mit wenigstens einer mit der Baufolie (1) verbundenen weiteren Folie und/oder mit wenigstens einem mit der Baufolie (1) verbundenen Träger.

15. Baufolienverbund nach Anspruch 14, **dadurch gekennzeichnet, daß** der Anteil des aus nachwachsenden Rohstoffen erhältlichen Materials (4) in dem Folienverbund und/oder der Anteil des biologisch abbaubaren Materials (4) in dem Folienverbund größer als 10 Gew.-% ist, vorzugsweise größer als 30 Gew.-%, weiter vorzugsweise größer als 60 Gew.-% und insbesondere größer als 95 Gew.-%.

## Claims

1. Film (1) for construction, especially a vapor control layer, a counter ceiling web or an underform web, with at least one functional layer (2) and optionally at least one other layer, especially a carrier layer and/or reinforcing layer (3), the functional layer (2) having a water vapor diffusion resistance (s_{d} value) that is dependent on the ambient humidity, **characterized in that** the functional layer (2) has at least one material (4) that can be obtained from a renewable raw material, especially at least one polymer based on a renewable raw material.

2. Film (1) for construction, especially a vapor control layer, a counter ceiling web or an underform web, with at least one functional layer (2) and optionally at least one other layer, especially a carrier layer and/or reinforcing layer (3), the functional layer (2) having a water vapor diffusion resistance (s_{d} value) that is dependent on the ambient humidity, especially as claimed in claim 1, **characterized in that** the functional layer (2) has at least one biodegradable material (4), especially a biodegradable polymer, and the biodegradable material (4) according to DIN EN 13432:2000 can disintegrate, and upon aerobic composting of the degradable material (4) after a composting interval of more than 12 weeks and at most 80 weeks that has been prolonged compared to DIN EN 13432:2000 a maximum 10% of the original dry weight of the biodegradable material (4) can be found in the screen fraction of the composted material greater than 2 mm.

3. Film as claimed in one of the preceding claims, wherein the tearing force of the functional layer (2) after at least 5 years of use in construction, preferably after at least 10 years, especially after 20 years, is at least 10 to 50 N/5 cm.

4. Film as claimed in one of the preceding claims, wherein the proportion of the material (4) that can be obtained from renewable raw materials in the functional layer (2) and/or the proportion of biodegradable material (4) in the functional layer (2) is greater than 40% by weight, preferably greater than 60% by weight, furthermore preferably greater than 80% by weight, and especially greater than 95% by weight.

5. Film as claimed in one of the preceding claims, wherein the proportion of the material (4) that can be obtained from renewable raw materials in the film and/or the proportion of biodegradable material (4) in the film is greater than 10% by weight, preferably greater than 30% by weight, furthermore preferably greater than 60% by weight, and especially greater than 95% by weight.

6. Film as claimed in one of the preceding claims, wherein the minimum elongation of the functional layer (2) according to DIN EN 12311 is greater than 5%, preferably greater than 20%, furthermore preferably greater than 50%, and especially greater than 100%, and/or wherein the maximum elongation of the functional layer (2) according to DIN 12311 is less than 1000%, preferably less than 600%, furthermore preferably less than 200%.

7. Film as claimed in one of the preceding claims, wherein the water absorption of the functional layer (2) according to DIN 53714 at 50% relative humidity and saturation is between 0.45 to 40%, preferably between 1.0 to 30%, furthermore preferably between 1.5 to 20%, especially between 2 to 8%, or between 10 to 40%.

8. Film as claimed in one of the preceding claims, wherein the tearing force of the functional layer (2) is 10 to 1500 N/5 cm, preferably 50 to 800 N/5 cm, furthermore preferably 80 to 500 N/5 cm.

9. Film as claimed in one of the preceding claims, wherein the functional layer (2) for a static water column of at least 10 cm, preferably of at least 1 m, furthermore preferably of at least 1.5 m, is watertight.

10. Film as claimed in one of the preceding claims, wherein the functional layer (2) has several layers.

11. Film as claimed in one of the preceding claims, wherein the further layer, preferably the carrier layer (3), is a textile layer, a fabric layer, a nonwoven layer or a further film, and/or wherein the further layer has at least one material that can be obtained from renewable raw materials, especially a polymer based on renewable raw materials, and/or wherein the further layer has at least one biodegradable material, especially a biodegradable polymer, preferably the biodegradable material according to DIN EN 13432:2000 being able to disintegrate, and upon aerobic composting of the degradable material after a composting interval of more than 12 weeks and at most 80 weeks, which interval has been prolonged relative to DIN EN 13432:2000, a maximum 10% of the original dry weight of the biodegradable material can be found in the screen fraction of the composted material greater than 2 mm.

12. Film as claimed in one of the preceding claims, wherein the water vapor permeability of the further layer is less than the water vapor permeability of the functional layer (2).

13. Film as claimed in one of the preceding claims, wherein the film can be obtained by cementing or bonding of at least of one functional layer (2) with at least one further layer or by extrusion coating or paste coating of at least one carrier layer (4) with at least one functional layer (2) or by spraying at least one functional layer (2) onto at least one carrier layer (4).

14. Film combination with at least one film (1) as claimed in one of the preceding claims 1 to 21 and optionally with at least one further film connected to the film (1) and/or with at least one carrier connected to the film (1).

15. Film combination as claimed in claim 22, wherein the proportion of the material (4) that can be obtained from renewable raw materials in the film combination and/or the proportion of biodegradable material (4) in the film combination is greater than 10% by weight, preferably greater than 30% by weight, furthermore preferably greater than 60% by weight, and especially greater than 95% by weight.

## Revendications

1. Film de construction (1), en particulier barrière de diffusion de vapeur, film de sous-toiture ou de sous-planchéiage avec au moins une couche fonctionnelle (2) et, le cas échéant, au moins une autre couche, en particulier une couche porteuse et/ou une couche renfort (3), la couche fonctionnelle (2) présentant une résistance à la diffusion de vapeur (indice S_{d}) fonction de l'humidité ambiante, **caractérisé en ce que** la couche fonctionnelle (2) comporte au moins un matériau pouvant être tiré d'une matière première renouvelable (4), en particulier au moins un polymère à base d'une matière première renouvelable.

2. Film de construction (1), en particulier barrière de diffusion de vapeur, film de sous-toiture ou de sous-planchéiage avec au moins une couche fonctionnelle (2) et, le cas échéant, au moins une autre couche, en particulier une couche porteuse et/ou une couche renfort (3), la couche fonctionnelle (2) présentant une résistance à la diffusion de vapeur (indice S_{d}) fonction de l'humidité ambiante, en particulier selon la revendication 1, **caractérisé en ce que** la couche fonctionnelle (2) comporte au moins un matériau biodégradable (4), en particulier un polymère biodégradable, le matériau biodégradable (4) pouvant se désintégrer selon DIN EN 13432:2000 et **en ce que**, lors d'un compostage aérobie du matériau décomposable (4), au bout d'une durée de compostage, prolongée par rapport à DIN EN 13432:2000, de plus de 12 semaines et d'au plus 80 semaines, dans une fraction de tamisage supérieure à 2 mm du matériau composté, on retrouve au maximum 10 % du poids à sec d'origine du matériau biodégradable (4).

3. Film de construction selon l'une quelconque des revendications précédentes, **caractérisé en ce que** la résistance au déchirement de la couche fonctionnelle (2) au bout d'un temps d'utilisation dans le secteur du bâtiment de 5 ans au moins, de préférence au bout de 10 ans au moins, en particulier au bout de 20 ans est d'au moins 10 à 50 N/5 cm.

4. Film de construction selon l'une quelconque des revendications précédentes, **caractérisé en ce que** la part des matériaux pouvant être tirés d'une matière première renouvelable (4) dans la couche fonctionnelle (2) et/ou la part des matériaux biodégradables (4) dans la couche fonctionnelle (2) est supérieure à 40 % en poids, de préférence supérieure à 60 % en poids, encore plus préférablement supérieure à 80 % en poids et en particulier supérieure à 95 % en poids.

5. Film de construction selon l'une quelconque des revendications précédentes, **caractérisé en ce que** la part des matériaux pouvant être tirés d'une matière première renouvelable (4) dans le film et/ou la part des matériaux biodégradables (4) dans le film est supérieure à 10 % en poids, de préférence supérieure à 30 % en poids, encore plus préférablement supérieure à 60 % en poids et en particulier supérieure à 95 % en poids.

6. Film de construction selon l'une quelconque des revendications précédentes, **caractérisé en ce que** la dilatation minimale de la couche fonctionnelle (2) selon DIN EN 12311 est supérieure à 5 %, de préférence supérieure à 20 %, encore plus préférablement supérieure à 50 % et en particulier supérieure à 100 %, et/ou **en ce que** la dilatation maximale de la couche fonctionnelle (2) selon DIN EN 12311 est inférieure à 1000 %, de préférence inférieure à 600 %, encore plus préférablement inférieure à 200 %.

7. Film de construction selon l'une quelconque des revendications précédentes, **caractérisé en ce que** l'absorption d'eau de la couche fonctionnelle (2) selon DIN 53714 sous une humidité relative de 50 % et à saturation est comprise entre 0,45 et 40 %, de préférence entre 1,0 et 30 %, de encore plus préférablement entre 1,5 et 20 %, en particulier entre 2 et 8 %, ou entre 10 et 40 %.

8. Film de construction selon l'une quelconque des revendications précédentes, **caractérisé en ce que** la résistance au déchirement de la couche fonctionnelle (2) est comprise entre 10 et 1500 N/5 cm, de préférence entre 50 et 800 N/5 cm, encore plus préférablement entre 80 et 500 N/5 cm.

9. Film de construction selon l'une quelconque des revendications précédentes, **caractérisé en ce que** la couche fonctionnelle (2) est étanche à l'eau pour une colonne d'eau statique d'au moins 10 cm, de préférence d'au moins 1 m, de encore plus préférablement d'au moins 1,5 m.

10. Film de construction selon l'une quelconque des revendications précédentes, **caractérisé en ce que** la couche fonctionnelle (2) est multicouche.

11. Film de construction selon l'une quelconque des revendications précédentes, **caractérisé en ce que** comme autre couche, de préférence comme couche support (3), sont prévus une couche de textile, une couche de tissu, une couche de nontissé, ou un autre film, et/ou **en ce que** l'autre couche comporte au moins en un matériau provenant de matières premières renouvelables, en particulier un polymère à base de matières premières renouvelables, et/ou **en ce que** l'autre couche comporte un matériau biodégradable, en particulier un polymère biodégradable, le matériau biodégradable étant de préférence désintégrable selon DIN EN 13432:2000 et **en ce que**, lors d'un compostage aérobie du matériau dégradable, après une durée de compostage allongée par rapport à DIN EN 13432:2000, de plus de 12 semaines et d'au plus 80 semaines, dans une fraction de tamisage supérieure à 2 mm du matériau composté, on retrouve au maximum 10 % du poids à sec d'origine du matériau biodégradable (4).

12. Film de construction selon l'une quelconque des revendications précédentes, **caractérisé en ce que** la perméabilité à la vapeur d'eau de l'autre couche est inférieure à la perméabilité à la vapeur d'eau de la couche fonctionnelle (2).

13. Film de construction selon l'une quelconque des revendications précédentes, **caractérisé en ce que** le film peut être obtenu par collage ou soudage d'au moins une couche fonctionnelle (2) avec au moins une autre couche ou par revêtement par extrusion ou revêtement de pâte d'au moins une couche support (4) avec au moins une couche fonctionnelle (2), ou par pulvérisation d'au moins une couche fonctionnelle (2) sur au moins une couche support (4).

14. Film de construction composite comportant au moins un film de construction (1) selon l'une quelconque des revendications précédentes 1 à 13, le cas échéant avec au moins un autre film assemblé avec le film de construction (1) et/ou avec au moins un support assemblé avec le film de construction (1).

15. Film de construction composite selon la revendication 14, **caractérisé en ce que** la part du matériau pouvant être tiré de matières premières renouvelables (4) dans le composite et/ou la part du matériau biodégradable (4) dans le composite est supérieure à 10 % en poids, de préférence supérieure à 30 % en poids, encore plus préférablement supérieure à 60 % en poids, et en particulier supérieure à 95 % en poids.
